# EUROPEAN PATENT SPECIFICATION

(11) **EP 1 529 497 B1**
(45) Date of publication and mention of the grant of the patent: **28.10.2009**
(21) Application number: 03025208.4
(22) Date of filing: 04.11.2003
(51) Int. Cl.: A61C 8/00

(54) **Dental implant component**
Dentalimplantatelement
Composant Implant Dentaire

(43) Date of publication of application: 11.05.2005
(73) Proprietor: FRIADENT GmbH, 68229 Mannheim (DE)
(72) Inventor: Groll, Werner, Dr., 63755 Alzenau (DE); Wolf, Dietrich, Dr., 69123 Heidelberg (DE); Spanel, André, 67433 Neustadt a. d. Weinstrasse (DE); Lange, Thomas, 63505 Langenselbold (DE); Bergner, Norbert, 68229 Mannheim (DE)
(74) Representative: Polypatent

(56) References cited:
- EP-A- 0 388 576
- US-A- 5 310 343
- US-A- 5 674 072
- US-A- 6 102 703

## Description

### Introduction and Background

The present invention relates to a dental implant component intended for insertion into the jawbone.

Such component is typically part of a dental implant comprising of at least two components whereby the at least one further component is intended for carrying a dental structure. Such dental structure may comprise an individual tooth replacement or dental prosthesis. For such intra-ossal tooth implants a distinction is made between so called single-phase and two-phase systems. A preference is depending on the needs and corresponding medical treatment concept for an individual patient. In a two-phase system a first component is inserted into the jawbone concealed under the gum in a first phase, which enables the implant component to osseointegrate safely without stress. In a second phase a further component carrying the artificial tooth or dental prosthesis is applied and mounted to the first component inserted into the jawbone. The component anchored in the jawbone has typically an appropriate screw profile or other macroscopic surface structure to achieve a firm primary anchorage in the jawbone. Various metal materials are known to be suitable for such kind of components whilst the use of pure titanium, typically in commercially pure grade, or titanium alloys approved for dental applications such as TiA16V4-alloy are preferred.

Great importance pertains to the mechanical joining both of the first component inserted into the jawbone and the connection between the first component and the further components carrying the dental structure, projecting into the mouth cavity. General requirements for such joins are the absorption and transfer of high masticatory forces at minimum geometrical dimensions and a connection between the implant components being free from play and as impervious to bacteria as possible. Such connections are known from the prior art, for instance, one connection based on a cone is known from US 4,772,204 A corresponding to WO 85/02337, and US 5,674,072 corresponding to EP 0 707 835.

Anatomical, biomechanical and aesthetic requirements typically require the use of a mechanical connection between the implant components omitting any rotation or move between the components. Not only in case where the mentioned requirements necessitates the use of a mechanical connection having an angle between the part anchored in the bone and the part carrying the dental structure which projects into the mouth cavity due to the individual conditions of teeth arrangement in the mouth of the patient, aesthetical and functional performance typically require exact rotational positioning of the components to each other even where the axis of the components are aligned to each other. Such positional accuracy is typically not effected by a simple threaded screw fitting as described in some prior art documents from the 1970's. Current fittings as mentioned before allow practically infinite rotational positioning which, however, requires corresponding mechanical positioning function in the mouth of the patient. An alternative is a set of dental implant components having positive joints, such as true-fitting hexagonal or octagonal geometries which allow rotational positioning of both components relative to each other in predetermined positions. Such positive joints are described in US 5,199,873 A1 corresponding to EP 0 438 048, US 5,125,840 and others.

Although these joints providing the advantage that the adjustment work in the mouth of the patient is much less than that of a cone fitting, these have the disadvantage that the rotational position is defined in steps and prevents rotation of position, as the component inserted into the bone and becoming firmly anchored there after the healing-in phase predetermines the final position of the support projecting into the mouth to which a dental prosthesis is applied.

A further problem with those positive fit rotational locks is the necessity of producing such connection elements with tolerances to ensure that the parts of the connection can be mounted together at all, thus, in practice makes it difficult, if not impossible, to provide a connection being free from play under the pulsating stress caused by the masticatory load applied with large forces and at a high cyclic rate. This may cause that a small amount of play present in the assembled structure at the beginning will become larger as the functional period increases causing small gaps between the components causing a risk of an intrusion of bacteria into the gap and/or mechanical disintegration of the assembly.

An important issue with respect to dental implants has been described as the mechanical connection between the implant and the jawbone. Any dental implant is subjected to high occlusal forces which are cyclically applied to the implant over many years. Whilst a large implant provides the advantage that the forces can be transferred to the bone over a larger surface area and, thus, the mechanical stress is reduced, a large implant has the disadvantage that the remaining bone material may be reduced and incapable of receiving the forces transferred by the implant because of a stress overload of the bone material. Further, the shape of the implant has a high impact on the mechanical reliability of the implant because the shape of the implant influences the direction of the forces transferred to the bone. Therefore, a lot of scientific work and lots of scientific publications and patent applications have been published over the years trying to provide an ultimate solution or at least directions for obtaining the optimum solution for the specific conditions of an individual patient.

Over the past few years different types of dental implants have been practically used which have a generally cylindrical shape or somewhat similar to a natural tooth root. Such dental implant whose upper end has a provision for anchoring a superstructure for the dental prosthesis is for instance disclosed in US 4,185,383 A. The dental implant comprises a post or stem element which can be implanted into the jawbone and is repeatedly stepped downward from the head towards the root. This dental implant has proven good in practice in the past and is known in the art as the "Tübingen Implant".

US 4,863,383 A discloses a screw-type dental implant whose post has a self-tapping thread on its outer surface. For implanting this implant a pilot hole having a uniform diameter over its entire length is drilled into the jawbone. The post has a core which tapers towards the root and is provided externally with the self-tapping thread. The thread depth decreases steadily to zero from the root end towards the upper end and the head portion situated at the crown, the outside diameter of the thread being made constant over the entire length. The thread must be screwed the entire length of the post into the prepared bore in the jawbone. While being careful not to traumatize the cortex screwing the thread the entire length of the post requires a correspondingly long time of operation, inasmuch as screwing it in too fast increases the danger of traumatizing the cortex. Misalignment of the axis of the bore in the jawbone and the axis of the post may provide unacceptable damage to the bore wall and the bone material when introducing the post into the bone. Implants with improved threads under these aspect are known from US 5,199,873 A and US 5,674,072 A already mentioned above.

An other system for a further improved adaptation of a dental implant to a specific jawbone of a patient is disclosed in DE 102 04 324 A1. According to a classification of the bone quality indicating the mechanical properties of jawbones different combinations of drilling tools and implants are provided to obtain the best possible stability and reliability of a dental implant for receiving a dental prosthesis for each specific patient.

It has also been recognized in the prior art that cellular interaction with the surface of the implant plays also an important role in achieving high mechanical strength and long-term stability of the implant in place. The endosseous section of an implant should encourage regeneration of the bone to ensure optimum distribution of forces from the implant over an area as large as possible. Various studies, for instance as published in Kiesewetter K., Schwartz Z., Hummert T.W., Cochran D.L., Simpson J., Dean D.D., Boyan B.D.: The role of implant surface characteristics in the healing of bone.; Vrit Rev Oral Biol Ned 1996; 7(4): 329-345, have demonstrated that osteoblasts require a porous and rough surface structure to be able to synthesize more bone specific matrix and to mineralize subsequently. EP 0 388 576 A1 suggests the provision of a plasma coating and/or a blasted and etched surface to improve the mechanical contact between the implant and the peri-implant hard tissue. The search report of EP 0 388 576 A1 further makes reference to GB-A.2 045 083, DE-A-2 717 615, EP-A-0 202 031, US-A-3,605,123, FR-A-2 421 595. US 5,310,343 A discloses a dental implant comprising notches on its outer circumference surface.

The subepithelial connective tissue supports the adaptation of the epithelium. In the healthy periodontium of a natural tooth, the subepithelial connective tissue is connected to the root by a network of fibers extending into the cementum. This can be emulated by an etched implant surface.

The epithelium has a sealing and protective function. In the healthy periodontium of a natural tooth, the cells of the non-keratinized squemous epithelium form a ring on the root surface in the region of the cementum enamel junction (CEJ) of the tooth. There are fibrous bundles in a circular pattern extending into both tissues in the transitional region to the subepithel connective tissue. The epithelium, therefore, primarily protects the subepithelial connective tissue against mechanical irritation and microbial invasion.

Prior art therefore generally proposes the top section of the implant being micro machined and polished. Further, WO 01/39690 teaches the at least two components of a dental implant being joined together with matching cylindrical coronal front edges to one another in a substantially jointless and smooth manner. Further, the front edge area of at least the component inserted into the jawbone is proposed to be fitted with a warm-gold colored esthetic covering in at least part of its axial extension to provide a shine of natural tooth through the epithelium.

Weber H.P. and Cochran D.L., in J Prosteht dent 1998; 79: 79-89, argue that dental implants currently in use exclusively have a smooth, machined surface in their suprabony, transmucosal portion. Due to the increased plaque retention being shown on rougher implant or abutment surfaces such smooth, machined surface is reported advantageous with respect to the long-term stability and health of the peri-implant soft tissue collar.

It has been found from studies that the bone material around the implant in the region of a polished crest surface of the implant is lost over the time, thus reducing the implant's stability under long term aspects.

Säuberlich S. et al.: Clin Oral Impl Res 1999: 10: 379-393 pointed out that a roughened surface bears a strong risk of promotion of a peri-implant infection of the soft tissue, and a massive increase of the risk of a bacterial infection.

### Summary of the Invention

It is therefore an object of the invention to provide a dental implant and a dental implant component for inserting into the jawbone of a patient which promotes improved healing-in of the implant component also in the top region of the implant component.

It has been surprisingly found that the top surface arrangement according to the present invention provides better healing-in of the tissue surrounding the implant component also in the top region of the implant. The inventive surface arrangement has been found an improvement although a polished or fine machined upper end of such an implant is absent even mentioned as required by the scientific publications in the prior art to prevent intrusion of plaque or microbial invasion into the epithelium region. The sealing effect of the epithelium interface with the implant component is enhanced and the long term hard and soft tissue stability is significantly improved.

This and other objects are achieved by a dental implant component intended for insertion into the jawbone comprising a post or stem having a longitudinal axis and an opening of a recess or cavity at the top for receiving a connecting means for carrying a dental superstructure, wherein the implant component has an outer surface extending along the longitudinal axis having a generally cylindrical or root shape, the outer surface comprising a top end section generally oriented along the longitudinal axis, wherein the component further comprises a top end face having at least one top surface generally surrounding the recess or cavity opening, the at least one top surface being provided with a micro-roughened surface having an average roughness R_{A} of 0.7 to about 1.1 µm. The inventive implant component has been found particularly advantageous with respect to healing-in of the epithelium and providing effective sealing against plaque and other microbial invasion contrary to what is predicted in prior art literature,

It is preferred that the top surface is at an angle from 0° to 35° to a plane perpendicular to the longitudinal axis, the angle being preferably 0° to about 30°, particularly that the top surface has a width between the opening and the outer circumference of at least about 0.2 mm, preferably of at least about 0.3 mm.

It is preferred according to the invention that the top surface is micro-roughened by etching, plasma treatment, or laser treatment.

It has been found effective if the inner edge of the top surface has a diameter of at least 1.6 mm, preferably 2.54 mm, particularly, if the outer edge of the top surface has a diameter of at most about 8 mm, preferably of about 2.7 mm to about 7 mm.

Further, a dental implant is proposed comprising a dental implant component described above intended for insertion into the jawbone of a patient and at least one further means for connecting an artificial tooth or a dental prosthesis with the implant component, and a dental prosthesis arrangement comprising such dental component.

The invention may be put into effect most effectively by treating a human or animal being with an dental implant and implant component described above.

### Brief Description of the Drawings

The present invention will be more easily and apparently understood from the following description of examples of embodiments of the invention.
Fig. 1 schematically shows a cross sectional view of an implant according to the invention comprising an inventive implant component;
Fig. 2 is a side elevational view of another embodiment of a dental implant of the invention partially in section along its axial plane;
Fig. 3 is a view corresponding fig. 2, but with the connecting means inserted;
Fig. 4 is a side elevational view of a third embodiment of an implant component according to the invention; and
Figs. 5 and 6 show views of surfaces of implant components according to the invention, prepared by SEM microscopy.

### Detailed Description of the Invention

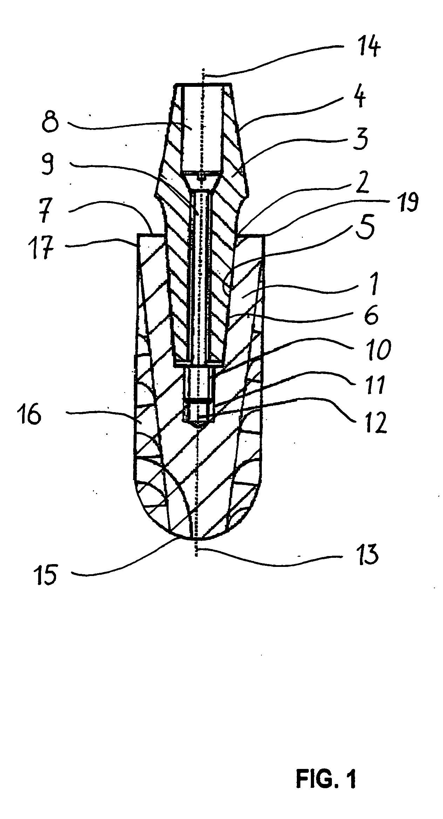

Figures 1 to 4 show various embodiments of dental implant components of the invention. Although each of the embodiments has its own advantages in use common features will not be described in detail with each of the embodiments. Therefore, similar features in the different embodiments will be designated with the same reference numbers. Any description of these embodiments is for illustrative purpose and of exemplary nature only. Nothing described or not described in this regard should be construed as a limitation of what is claimed.

In figure 1 a two-phase, two component tooth implant is shown, which is capable of being steplessly positioned in its rotational orientation, including a first implant component 1, having a central cavity opening 2, which implant component 1 is capable of being inserted into a jawbone, and a second implant component 3 which may carry a dental structure (not shown) and thus forming connecting means. The second component 3 includes a conical seating element 4 for the dental prosthesis and a part 5 which fits into said central cavity 6 of said first implant component 1. The central cavity 6 within said first implant component 1 is conical in shape and the part 5 of said second implant component 3 which fits into the central cavity 6 in the first implant component 1 is a matching cone which mates with the opening 2 in the top surface 7 of the first component 1.

The second implant component 3 has a central bore 8 passing through said second implant component 3. Within this central bore 8 is located the tapered cylindrical shaft of reduced diameter of a tension screw 9. The screw 9 has a widened end with an outer fastening thread 10 which fits into the inner thread 11 of a blind bore 12. The central seating opening 2 of said first implant component 1 comprises the blind bore 12 as an extended region beyond the depth necessary to accommodate the tapered cone 5 of the second implant component 3 and which region accommodates the tip of the screw 9.

Both implant components 1, 3 each define a longitudinal axis 13, 14, respectively. The axes of the two conical parts 4, 5 of the second implant component 3 are in general alignment with each other, however, these axes may form an angle for specific implantation conditions.

It has proved advantageous if the angle of the conical cavity 6 of the first implant component 1 and the angle of the part 5 of the second implant component 3 fitting within it are selected so as to produce a self-locking cone connection. The angles are therefore of practically identical sizes.

The first implant component 1 has an essentially cylindrical outer form with a spherically rounded end 15 and a thread 16 of specially adapted geometry (e.g., with a varying flank depth), as known from and described in US 5,674,072 A. The outer surface of the implant component 1, except the top region 17 of it, may be blasted to provide roughening of the surface to enhance bone integration of the implant component 1. The outer circumferential surface of the implant component 1 may be further treated by etching in suitable acid composition.

However, the top section 17 of the first implant component 1, and especially the top surface 7 of the first implant component 1is according to the invention micro-roughened to an arithmetical mean roughness R_{A} of about 0.7 *µ*m to about 1.1 *µ*m, preferably 0.7 *µ*m to 0.9*µ*m. The roughness is preferably obtained by etching the whole implant component 1 in a suitable acid composition. During etching, the opening 2 of the cavity 6 should be sealed by a plug, or a mounted second implant component 3 part of the connecting means. Roughening may be obtained through other suitable methods, e.g. plasma etching.

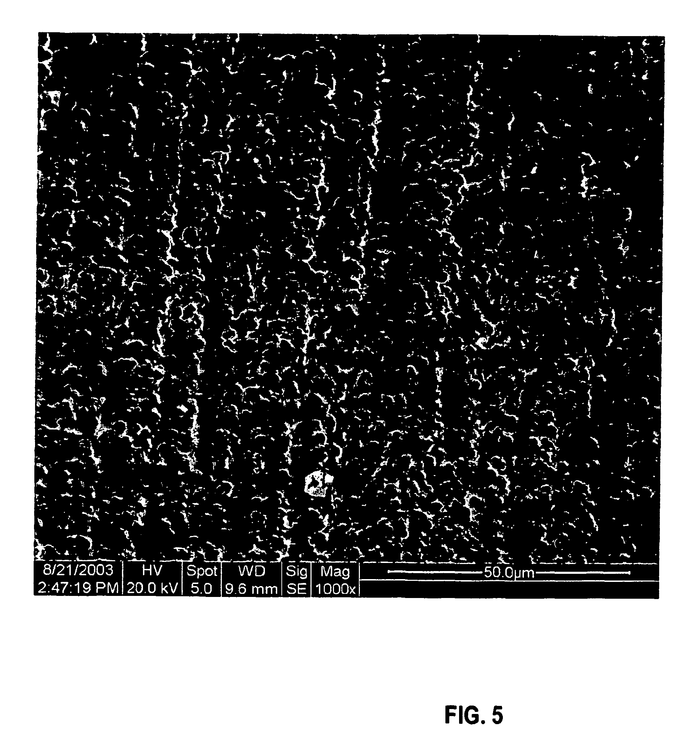

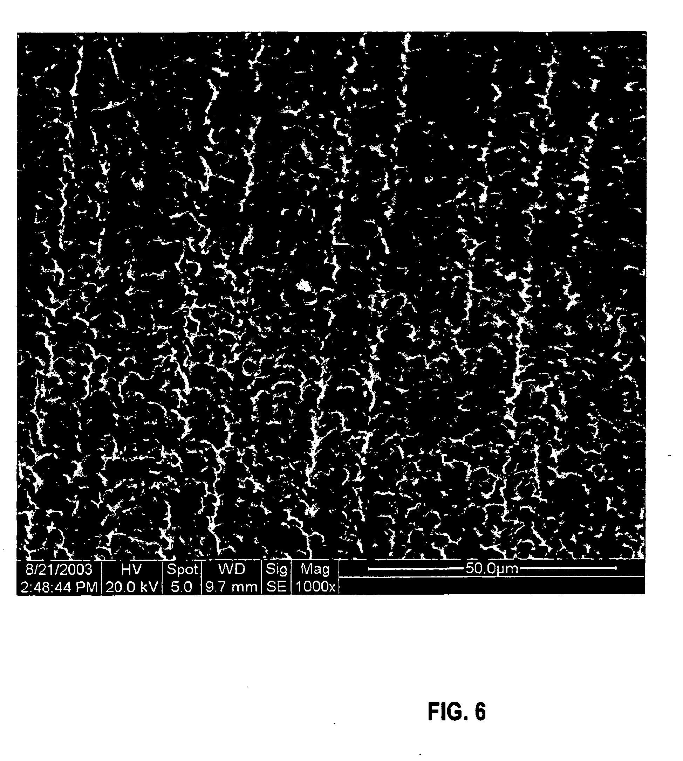

SEM pictures of a top surface prepared according to the invention are shown in figures 5 and 6.

The top surface 7 of the implant component 1 surrounding the opening 2 of the cavity 6 is arranged generally perpendicular to the longitudinal axis 13 of the implant component 1 and is preferably at least about 0.2 mm wide, depending on the size of the implant component 1.

The cone connection enables the implant components 1, 3 to be firmly joined together in a gap-free, rotationally stable connection due to the cone angle being matched to the friction ratios of the cone connection and to the central tension screw 9 being aligned within the axis 14 of the cone 5, the rotational position of the two implant components 1, 3 being freely and steplessly selectable during assembly.

The first and second implant component 1, 3 may be made of pure titanium or titanium alloys approved for dental applications such as TiAl6V4 alloy.

The first implant component 1 is primarily anchored in the bone, being surrounded and held stable by the bone structure during the healing-in phase, by means of a special outer thread 16, the flank geometry of which varies over the length of the implant 1. The special form of the outer thread 16 is such that the masticatory forces are dispersed in a direction perpendicular to the surfaces of the thread flanks and directed into the depth of the bone mass in correspondence with the form of these flanks which varies over the length of the implant 1. This positive fit is supported by recesses at the lower end and by a microstructure on the entire surface which comes into contact with the spongy bone mass. Inner thread 11 matches with the thread of the central tension screw 9.

The second implant component 3 has the form of two cylindrical truncated cones 4, 5, one mounted on the other by their bases, having axes 14 which can be aligned to each other or enclose an angle, one of the two cones 5 fitting into the central cavity 6 of the first implant component 1 anchored in the bone, while the other cone 4 supports the dental prosthesis.

The inner edge 2 of the top surface 7 forming the outer diameter of the opening 2 of the tapered cavity 6, has a diameter of approximately 2.54 mm (1/10"). The top surface 7 may be surrounded by a second outer top surface (not shown) declined towards the bottom of the implant component 1 by an angle of about 30° with respect to a plane perpendicular to the longitudinal axis 13. The total outer diameter of the top surfaces 7 ranges from 3 to 8 mm depending on the size of the implant component.

By means of a standardized, equally dimensioned cone connection, it is possible for parts 1 which are to be anchored in the jawbone and which are of widely differing geometry, e.g. having different diameters and lengths, to be freely combined with parts 3 which project into the mouth cavity, so that the individual conditions of the patient to be treated are accommodated to a high degree with a relatively small number of components.

The invention will be further explained in further detail with reference to another illustrative preferred embodiment shown in the accompanying drawings wherein:

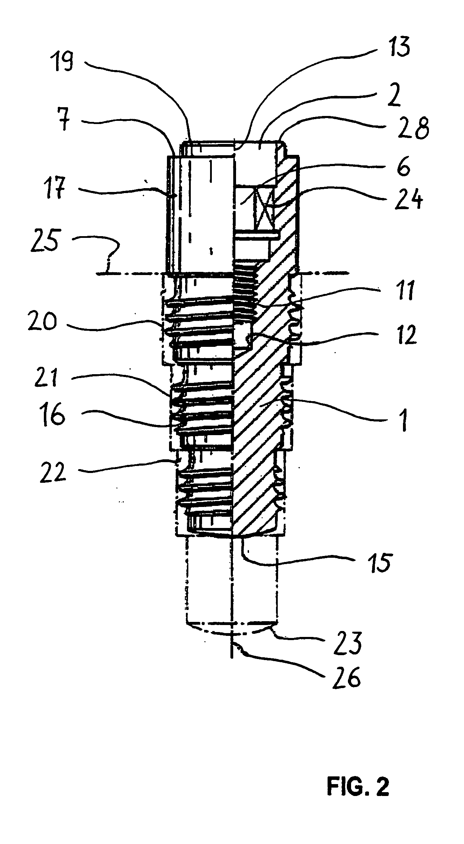

Figure 2 shows dental implant component 1 in the form of a stem or post partially in elevation and partially in an axial longitudinal section, wherein the implant component 1 can be anchored in the jawbone, and capable of receiving in its cavity 6 a head as part of a connecting means 3 which can be joined to the post 1. The head may be constructed in two pieces, a coupling means 9 and a crown support 3, which can also be integral with each other.

The second component 3 with its dental crown support 18 has an outer surface that tapers toward the post 1. Its bottom face is thus smaller than it would be in the case of a cylindrical configuration with an outside diameter corresponding to that of the post 1. Due to this "diminution" of the bottom face, it is easier to work, and especially to grind or mill flat the face.

The implant component or post 1 preferably is formed of metal, particularly of titanium or a titanium alloy, as described with the first embodiment of the invention. The post 1 has a stepped profile in which the diameters of successive steps decrease toward the root end 15 of the post 1. The top section 17 adjacent the top end 19 has a cylindrical outer surface, while the three other steps 20, 21, 22 have self-tapping threads for turning and cutting into the jawbone. The three steps 20, 21, 22 provided with the threads are each of substantially the same length.

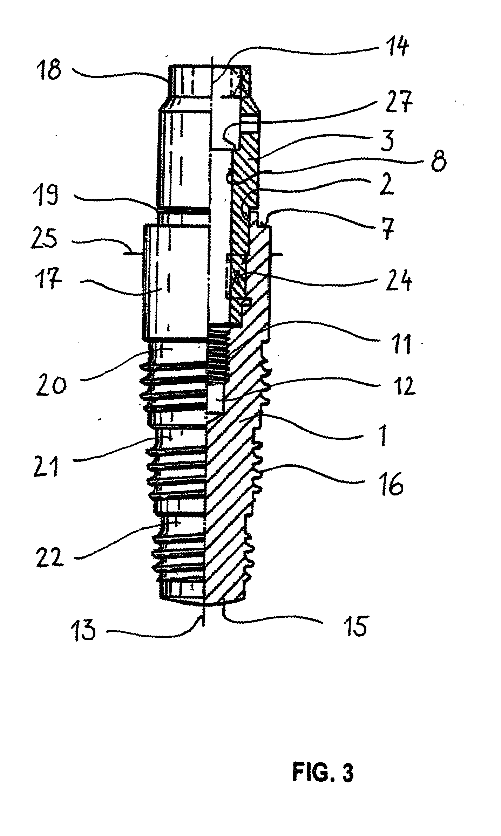

In the embodiment shown in figures 2 and 3, at least approximately three thread flights are provided on each of the threaded steps 20, 21, 22 so that only three turns are needed to screw it in. Since the post 1 is simply inserted into the stepped bore 23 in the jawbone leaving only the length of one step exposed, and then is screwed in for the length of only one step with three turns, the operating time is minimized without the fear of traumatizing the cortex with the screw thread.

A recess or cavity 6 provided in the interior of the implant component or post 1 comprises a portion 24 in the form of a hexagon with flat surfaces. This portion 24 serves to receive an inserted tool, such as an hexagonal screwdriver "Inbus" key, to enable a torque to be exerted about the longitudinal axis 13 in order to implant the post 1. Of course, portion 24 can also be configured to receive tools having other configurations in order to insert the post 1 into the jaw and screw it to a depth corresponding to the length of one step into the bore 23 which has been drilled accordingly.

Toward the root end 15 the cavity 6 contains an internal thread 11 with a smaller diameter than that of portion 24. Internal thread 11 is spaced axially from portion 24. Thus damage to the internal thread 11 by a tool designed for portion 24 is reliably prevented.

Although the aforedescribed configuration with screw threads 20, 21, 22 on the outer surfaces coaxial with the longitudinal axis 13 has proven to be practical, it is also within the scope of the invention to use configurations which instead have gaps on the outside surfaces corresponding to U.S. Pat. No. 4,185,383. The second implant component 3 or connecting means is fixedly joined to the post 1 by means of a screw 9, whose root end 10 engages the internal thread 11 of the post 1. Immediately after the post 1 is implanted, the cavity 6 is advantageously plugged with a temporary screw or the like (not shown). After the post 1 has set in the jaw, any gum tissue that has overgrown the top surface 7 is cut open and the temporary screw is removed again so that the connecting means 3 can be introduced into the cavity 6 in the manner shown and fastened by means of the screw 9.

The broken lines indicate the stepped bore 23 in the jawbone, whose upper edge 25 is likewise indicated by broken lines. The post 1 is shown in the position in which it has already been inserted into the jawbone with only one step-length remaining exposed. As can be seen, the bore 23 has four steps whose respective diameters are each at least equal to the outside or crest diameter of the thread of the step 20, 21, 22 of the post 1 which is screwed into the next following step of the bore 23. The post 1 is already inserted to 3/4 of its total length into the stepped bore 23, so that a precise alignment with the longitudinal axis 26 of bore 23 is established. The post 1 can then be screwed in by one more step-length, reliably and without special difficulty and without special measures for guiding the post 1.

In figure 3, the second component 3 as part of connecting means is inserted into the blind hole 12 in the post 1. Here the longitudinal bore 8 for the screw 9 for joining to the post 1 can easily be seen. This longitudinal bore 8 has an annular shoulder 27 for engagement by the head of the connecting screw 9 which can be screwed with its external thread 10 into the internal thread 11 of the post 1. The upper edge 25 of the jaw bone is indicated by the broken line. The upper end 19 of the post 1 extends a distance upwardly beyond the upper edge 25 of bore 23. The top surface 7 of the post 1 and the connecting means 3 consequently are situated in the gingival area.

The second component 3 of the connecting means is inserted into the cavity 6, the co-operation of the outer surface with the lateral surfaces of the hexagonal portion 24 assures that the connecting means is locked against rotation with respect to the post 1.

The implant component shown in figure 2 and 3, respectively, has a stepped top surface arrangement with an inner and upper first top surface 28 and an outer second top surface 7. The top section 17 of the first implant component 1, and especially the outer 7 and preferably also the inner top surface 28 of the first implant component 1, may be, as known in the art, fine machined and optionally polished, however, are, according to the invention, micro-roughenedto a roughness R_{A} of about 0.7 *µ*m to about 1.1 *µ*m, preferably 0.7 *µ*m to 0.9 *µ*m. The roughness is preferably obtained by etching the whole implant component 1 in a suitable acid composition. During etching, the opening 2 of the cavity 6 should be sealed by a plug, or a mounted second implant component 3 part of the connecting means. The roughening may be alternatively obtained through any other suitable treatment, for instance laser treatment.

SEM pictures of a top surface 7, 28 prepared according to the invention are shown in figures 5 and 6.

The first top surface 28 of the implant component 1 surrounding the opening 2 of the cavity 6 is arranged generally perpendicular to the longitudinal axis 13 of the implant component 1 and is preferably at least 0.2 mm wide, depending on the size of the implant component 1.

The inner edge of the first top surface 28 forming the outer diameter of the opening 2 of the cavity 6 has a diameter of at least approximately 2.5 mm. This diameter may be larger for large dental implant components. The first top surface 28 and the second outer top surface 7 are arranged approximately perpendicular to the longitudinal axis 13. The total outer diameter of the top surfaces 28, 7 ranges from 3 to 8 mm depending on the size of the implant component 1.

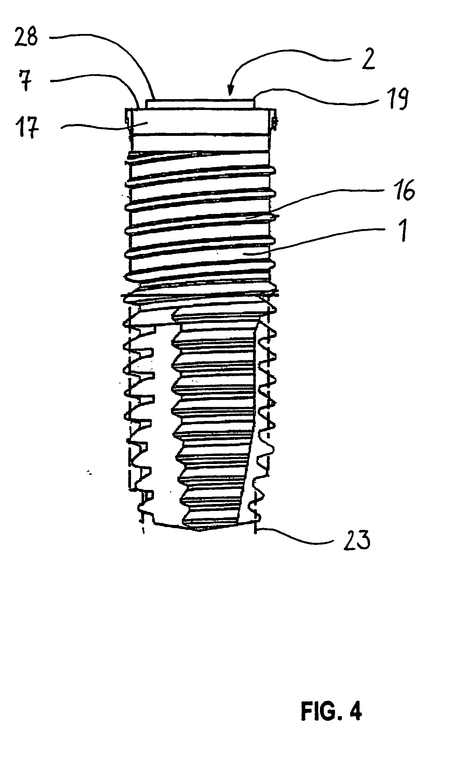

Figure 4 shows a further embodiment of an implant component 1 according to the present invention. This type of implant is especially designed to form part of a platform type system with allows to provide a single size of an implant component 1 for insertion into the jawbone being combined with a variety of sizes of further implant components 3 forming connecting means for carrying a dental prosthesis superstructure. In this regard the outer diameter of the connecting means 3 for interacting with the top surface 7 of the first implant component 1 does not exceed the diameter of the top surface 7 of the implant component 1 inserted into the jawbone. So the individual conditions of the patient to be treated are accommodated to a high degree with a relatively small number of components, and a relatively large implant component 1 for minimizing mechanical stress in the bone can be used also for receiving only small dental prosthesis parts, where the mechanical conditions of the jawbone so require.

Also the top surface of this type of implant may be of a stepped arrangement depending on the size, with an inner and upper first top surface 28 and an outer second top surface 7. The top section 17 of the first implant component 1, and especially the outer 7 and preferably also the inner 28 top surface of the first implant component 1, may be, as known in the art, fine turned and/or polished, however, are, according to the invention, micro-roughened, to a roughness R_{A} of about 0.7 *µ*m to about 1.1 *µ*m, preferably 0.7 *µ*m to 0.9 *µ*m. The roughness is preferably obtained by etching the whole implant component 1 in a suitable acid composition. During etching, the opening 2 of the cavity 6 should be sealed by a plug, or a mounted second implant 3 component part of the connecting means. Micro-roughening of the top surfaces 7, 28 may be obtained also through other suitable treatment, for instance plasma treatment.

SEM pictures of a top surface prepared according to the invention are shown in figures 5 and 6.

The inner edge of the upper first top surface 28 forming the outer diameter of the opening 2 of the cavity 6 for receiving the connecting means 3 has a diameter of approximately 1.6 mm. The total outer diameter of the top surfaces 7, 28 ranges from 2.7 to 8 mm depending on the size of the implant component.

The foregoing description of examples have been set forth merely to illustrate the invention and are not intended to be limiting.

## Claims

1. A dental implant component intended for insertion into the jawbone comprising a post or stem (1) having a longitudinal axis (13) and an opening (2) of a recess or cavity (6) at the top (19) for receiving a connecting means (3, 9) for carrying a dental superstructure, wherein the implant component (1) has an outer surface extending along the longitudinal axis (13) having a generally cylindrical or root shape, the outer surface comprising a top end section (17) generally oriented along the longitudinal axis (13), wherein the component (1) further comprises a top end face having at least one top surface (7, 28) generally surrounding the recess or cavity (6) opening (2), the at least one top surface (7, 28) being provided with a micro-roughened surface having an average roughness R_{A} of 0.7 to about 1.1 µm.

2. Dental implant component according to claim 1, wherein the top surface (7, 28) is at an angle from 0° to 35° to a plane perpendicular to the longitudinal axis (13), the angle being preferably 0° to about 30°.

3. Dental implant component according to any of the preceding claims, wherein the top surface (7, 28) has a width between the inner edge and the outer circumference of at least about 0.2 mm, preferably of at least about 0.3 mm.

4. Dental implant component according to any of the preceding claims, wherein the at least one top surface (7, 28) is micro-roughened by etching, plasma treatment, or laser treatment.

5. Dental implant component according to any of the preceding claims, wherein the inner edge of one of the top surfaces (7, 28) has a diameter of at least 1.6 mm, preferably 2.54 mm.

6. Dental implant component according to any of the preceding claims, wherein the outer edge of one of the top surfaces (7, 28) has a diameter of at most about 8 mm, preferably of about 2.7 mm to about 7 mm.

7. A dental implant comprising a dental implant component (1) according to one of the preceding claims intended for insertion into the jawbone of a patient and at least one further means (3, 9) for connecting an artificial tooth or a dental prosthesis with the implant component (1).

8. A dental prosthesis arrangement comprising at least one dental implant (1, 3) according to claim 7.

## Patentansprüche

1. Komponente eines dentalen Implantats vorgesehen zum Einsetzen in den Kieferknochen, enthaltend einen Pfosten (1) mit einer Längsachse (13) und einer Öffnung (2) einer Vertiefung oder Kavität (6) an der Oberseite (19) zur Aufnahme von Verbindungsmitteln (3, 9) zum Tragen einer dentalen Suprastruktur, wobei die Implantatkomponente (1) eine äußere Oberfläche aufweist, die sich entlang der Längsachse (13) erstreckt und eine im Wesentlichen zylindrische oder Wurzelform aufweist und die äußere Oberfläche einen im Wesentlichen entlang der Längsachse (13) orientierten oberen Endabschnitt (17) umfasst, wobei die Komponente (1) ferner eine Oberseite umfasst mit zumindest einer im Wesentlichen die Öffnung (2) der Vertiefung oder Kavität (6) umgebenden Stirnfläche (7, 28), wobei die wenigstens eine Stirnfläche (7, 28) mit einer mikrorauen Oberfläche mit einer mittleren Rauhigkeit R_{A} von 0,7 bis ungefähr 1,1 µm versehen ist.

2. Komponente eines dentalen Implantats nach Anspruch 1, bei der die Stirnfläche (7, 28) in einem Winkel von 0° bis 35° zu einer senkrecht zur Längsachse (13) stehenden Ebene angeordnet ist, wobei der Winkel vorzugsweise 0° bis etwa 30° groß ist.

3. Komponente eines dentalen Implantats nach einem der vorhergehenden Ansprüche, bei der die Stirnfläche (7, 28) zwischen der inneren Kante und dem äußeren Umfang eine Breite von wenigstens etwa 0,2 mm, vorzugsweise von wenigstens etwa 0,3 mm aufweist.

4. Komponente eines dentalen Implantats nach einem der vorhergehenden Ansprüche, bei der die zumindest eine Stirnfläche (7, 28) durch Ätzen, Plasmabehandlung oder Laserstrukturierung mikroaufgeraut ist.

5. Komponente eines dentalen Implantats nach einem der vorhergehenden Ansprüche, bei der die innere Kante von einer der Stirnflächen (7, 28) einen Durchmesser von wenigstens 1,6 mm, vorzugsweise 2,54 mm aufweist

6. Komponente eines dentalen Implantats nach einem der vorhergehenden Ansprüche, bei der die äußere Kante von einer der Stirnflächen (7, 28) einen Durchmesser von höchstens etwa 8 mm, vorzugsweise von etwa 2,7 mm bis etwa 7 mm aufweist.

7. Dentales Implantat umfassend eine Komponente eines dentalen Implantats (1) nach einem der vorhergehenden Ansprüche vorgesehen zum Einsetzen in den Kieferknochen eines Patienten und wenigstens eine weitere Einrichtung (3, 9) zum Verbinden eines künstlichen Zahns oder einer dentalen Prothese mit der Komponente des Implantats (1).

8. Anordnung einer Dentalprothese enthaltend wenigstens ein dentales Implantat (1, 3) nach Anspruch 7.

## Revendications

1. Composant d'implant dentaire prévu pour l'insertion dans la mâchoire comprenant un tenon ou tige (1) ayant un axe longitudinal (13) et une ouverture (2) d'un évidement ou cavité (6) au niveau de la partie supérieure (19) pour recevoir des moyens de raccordement (3, 9) afin de supporter une super structure dentaire, dans lequel le composant d'implant (1) a une surface externe s'étendant le long de l'axe longitudinal (13) ayant une forme généralement cylindrique ou de racine, la surface externe comprenant une section d'extrémité supérieure (17) orientée généralement le long de l'axe longitudinal (13), dans lequel le composant (1) comprend en outre une face d'extrémité supérieure ayant au moins une surface supérieure (7, 28) entourant généralement l'ouverture (2) de l'évidement ou cavité (6), la au moins une surface supérieure (7, 28) étant prévue avec une surface micro rugosifiée ayant une rugosité moyenne R_{A} de 0,7 à environ 1,1 µm.

2. Composant d'implant dentaire selon la revendication 1, dans lequel la surface supérieure (7, 28) est orientée selon un angle de 0° à 35° par rapport à un plan perpendiculaire à l'axe longitudinal (13), l'angle étant de préférence de l'ordre de 0° à environ 30°.

3. Composant d'implant dentaire selon l'une quelconque des revendications précédentes, dans lequel la surface supérieure (7, 28) a une largeur entre le bord interne et la circonférence externe d'au moins 0,2 mm, de préférence d'au moins environ 0,3 mm.

4. Composant d'implant dentaire selon l'une quelconque des revendications précédentes, dans lequel la au moins une surface supérieure (7, 28) est micro rugosifiée par gravure chimique, traitement au plasma ou traitement au laser.

5. Composant d'implant dentaire selon l'une quelconque des revendications précédentes, dans lequel le bord interne de l'une des surfaces supérieure (7, 28) a un diamètre d'au moins 1,6 mm, de préférence de 2,54 mm.

6. Composant d'implant dentaire selon l'une quelconque des revendications précédentes, dans lequel le bord externe de l'une des surfaces supérieures (7, 28) a un diamètre maximum d'environ 8 mm, de préférence d'environ 2,7 mm à environ 7 mm.

7. Implant dentaire comprenant un composant d'implant dentaire (1) selon l'une quelconque des revendications précédentes, prévu pour l'insertion dans la mâchoire d'un patient et au moins un moyen supplémentaire (3, 9) pour raccorder une dent artificielle ou une prothèse dentaire au composant d'implant (1).

8. Agencement de prothèse dentaire comprenant au moins un implant dentaire (1, 3) selon la revendication 7.
